# EUROPÄISCHE PATENTSCHRIFT

(11) **EP 2 896 285 B1**
(45) Veröffentlichungstag und Bekanntmachung des Hinweises auf die Patenterteilung: **25.01.2017**
(21) Anmeldenummer: 14193019.8
(22) Anmeldetag: 13.11.2014
(51) Int. Cl.: A01D 89/00, A01D 75/20, B60Q 1/30

(54) **Schwadaufnehmer mit Warntafeln**
Swath pickup with warning panel
Ramassage d'andains doté d'un panneau de signalisation

(30) Priorität: 17.01.2014 DE 102014200770
(43) Veröffentlichungstag der Anmeldung: 22.07.2015
(73) Patentinhaber: Maschinenfabrik Kemper GmbH & Co. KG, 48703 Stadtlohn (DE)
(72) Erfinder: Schmöning, Christoph, 45721 Haltern (DE)
(74) Vertreter: Holst, Sönke

(56) Entgegenhaltungen:
- EP-A1- 0 744 317
- DE-A1- 3 938 997
- DE-A1-102008 001 459
- DE-U1- 9 001 562

## Beschreibung

Die Erfindung betrifft einen Schwadaufnehmer für einen Feldhäcksler, mit einem Gestell, an dem ein Förderzinken umfassender Aufnehmer, ein Querförderer, ein an Tragarmen abgestützter Niederhalter und zwei Stützradzusammenbauten angebracht sind, wobei die Stützradzusammenbauten jeweils eine Halterung und ein Stützrad umfassen, die zwischen einer nach außen verschwenkten Feldarbeitsposition und einer nach innen verschwenkten Straßenfahrposition beweglich sind.

### Technologischer Hintergrund

In der Landwirtschaft verwendete Geräte werden nicht nur auf dem Feld eingesetzt, sondern sind auch auf Straßen zu transportieren, um sie beispielsweise vom Hof zum Feld und zurück zu verbringen. Um die von den Geräten ausgehende Unfallgefahr zu vermindern, werden diese üblicherweise mit einem so genannten, mit Warntafeln und Abdeckplanen versehenen Transportschutz ausgestattet, um scharfe oder nach außen ragende Elemente des Geräts abzudecken.

Hierzu sei beispielsweise auf einen Prospekt der Fa. Geringhoff "Klappbares Getreideschneidwerk Grainstar", ohne Druckvermerk, verwiesen, der auf der Messe Agritechnica im November 1997 verteilt wurde. Dieser Transportschutz wird vor der Straßenfahrt angebracht und vor Aufnahme der Feldarbeit wieder abgenommen. Dabei ist als nachteilig anzusehen, dass der Transportschutz recht sperrig und somit von einer einzigen Person kaum handhabbar ist. Er liegt während der Arbeit meist am Feldrand und muss nach deren Ende in vielen Fällen zunächst gesucht werden, um ihn wieder anbringen zu können.

Weiterhin sind Mähgeräte und Heuwerbungsmaschinen beschrieben worden, die Abdeckungen aus in sich flexiblem Material aufweisen, wobei zusätzlich Warntafeln in die flexiblen Abdeckungen integriert sind (EP 0 744 317 A1, DE 199 18 194 A1, DE 10 2008 062 712 A1). Derartige, fest mit dem Gerät verbundene Warntafeln eignen sich vornehmlich für Geräte, die mit flexiblen Abdeckungen ausgestattet sind, während separate Warntafeln in vielen Fällen beim Betrieb des Geräts stören würden.

Die EP 2 020 172 A1 zeigt einen Erntevorsatz mit Seitenteilen, die fremdkraftbetätigt zwischen einer abgesenkten Betriebsstellung und einer angehobenen Transportstellung verschwenkt werden können. Mit dieser Verstellung der Seitenteile ist auch eine seitliche Abdeckung gekoppelt, die den Erntevorsatz bei angehobenen Seitenteilen zur Seite hin abdeckt. Eine Warnfunktion der seitlichen Abdeckung wird nicht erwähnt.

Schließlich beschreibt die DE 10 2004 059 052 A1 ein Zusatzfahrwerk, das bei der Straßenfahrt unter einen Erntevorsatz geschoben wird, um die Vorderräder der den Erntevorsatz tragenden Erntemaschine zu entlasten. An dem Zusatzfahrwerk sind Warntafeln angebracht. Dieser Vorschlag eignet sich jedoch nicht für Geräte, die kein Zusatzfahrwerk benötigen.

### Aufgabe

Die vorliegende Erfindung hat sich zur Aufgabe gesetzt, die oben erwähnten Nachteile bei einem Erntevorsatz in Form eines Schwadaufnehmers zu vermeiden oder zumindest zu vermindern.

### Erfindung

Die vorliegende Erfindung wird durch die Patentansprüche definiert.

Ein Schwadaufnehmer für einen Feldhäcksler umfasst ein Gestell, an dem ein Förderzinken umfassender Aufnehmer mit einem Rotor oder Fördergurt, ein Querförderer, ein an Tragarmen abgestützter Niederhalter und zwei Stützradzusammenbauten angebracht sind. Die Stützradzusammenbauten umfassen jeweils eine Halterung und ein Stützrad, die gemeinsam zwischen einer nach außen verschwenkten Feldarbeitsposition und einer nach innen verschwenkten Straßenfahrposition beweglich sind. An den Halterungen der Stützradzusammenbauten sind jeweils eine erste, sich vertikal und in der Straßenfahrposition quer zur Vorwärtsrichtung des Schwadaufnehmers erstreckende Warntafel und jeweils eine zweite, sich vertikal und in der Straßenfahrposition entlang der Vorwärtsrichtung des Schwadaufnehmers erstreckende Warntafel befestigt, die sich mit der Halterung und dem Stützrad zwischen der Feldarbeitsposition und der Straßenfahrposition bewegen. Eine dritte, an beiden Tragarmen des Niederhalters befestigte Warntafel erstreckt sich zwischen den Tragarmen. Die dritte Warntafel schließt sich bei in der Straßenfahrposition befindlichen Stützrädern in Querrichtung vorzugsweise lückenlos an die ersten Warntafeln an. In vertikaler Richtung kann die dritte Warntafel gegenüber den ersten Warntafeln genau ausgerichtet oder nach oben oder unten versetzt sein, überlappt aber vorzugsweise mit den ersten Warntafeln.

Mit anderen Worten wird der Schwadaufnehmer mit ersten Warntafeln ausgestattet, die an der Halterung der Stützräder befestigt werden und sich in deren Straßenfahrposition quer zur Vorwärtsrichtung des Schwadaufnehmers erstrecken. Zwischen den beiden ersten Warntafeln (wenn sie in die Straßenfahrposition verbracht sind) erstreckt sich die dritte Warntafel, die an den Tragarmen des Niederhalters befestigt ist. Demnach wird der Schwadaufnehmer durch die ersten Warntafeln und die dritte Warntafel nach vorn mit einer sich vorzugsweise lückenlos über gesamte Breite des Schwadaufnehmers erstreckenden Warnfunktion für die Straßenfahrt versehen. Eine zur Seite gerichtete Warnfunktion übernehmen die zweiten Warntafeln. In der Arbeitsposition der Halterungen werden die ersten und zweiten Warntafeln mit den Stützrädern zur Seite verschwenkt und stören nicht bei der Erntegutaufnahme, was auch für die dritte Warntafel gilt.

Auf diese Weise wird der Schwadaufnehmer für den Straßentransport, bei dem er an der Vorderseite der selbstfahrenden Erntemaschine (Feldhäcksler oder Mähdrescher) verbleibt, mit den erforderlichen Warntafeln ausgestattet, ohne dass der Bediener der Erntemaschine dafür seinen Arbeitsplatz verlassen müsste.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
- Fig. 1: eine seitliche Ansicht einer selbstfahrenden Erntemaschine mit einem Schwadaufnehmer,
- Fig. 2: eine perspektivische Ansicht des Schwadaufnehmers in einer Feldarbeitsposition und
- Fig. 3: eine perspektivische Ansicht des Schwadaufnehmers in einer Straßenfahrposition.

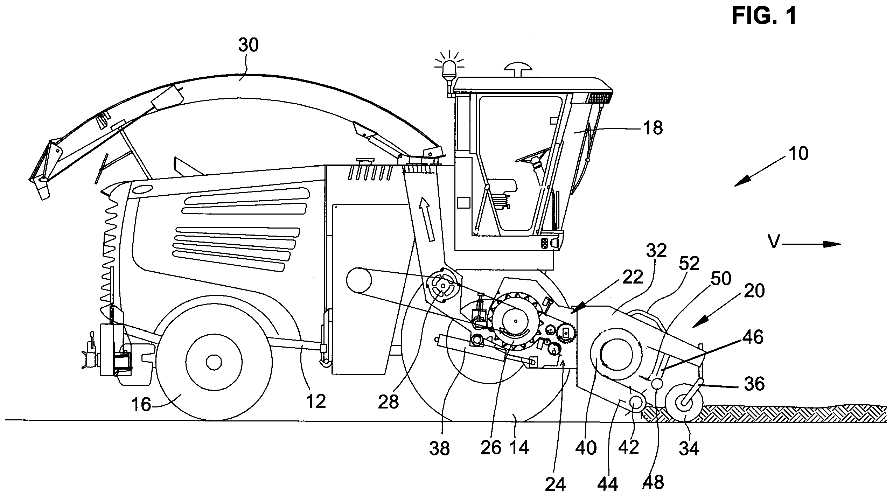

In der Figur 1 ist eine selbstfahrende Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz in Form eines Schwadaufnehmers 20 einsehbar ist. Mittels des Schwadaufnehmers 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsrichtung V der Erntemaschine 10, die in der Figur 1 nach rechts verläuft.

Der Schwadaufnehmer 20 wird auch als Pick-up bezeichnet und ist als selbständige Einheit ausgestaltet, die von der Erntemaschine 10 abnehmbar ist, beim Straßentransport letzterer jedoch an deren Vorderseite befestigt bleibt. Die Erntegutaufnahmevorrichtung 20 baut sich auf einem Gestell 32 auf und stützt sich über beidseitig angebrachte Stützradzusammenbauten, die sich jeweils aus Stützrädern 34 und einer Halterung 36 zur Befestigung der Stützräder 34 am Gestell 32 zusammensetzen, auf dem Erdboden ab. Die Aufgabe der Erntegutaufnahmevorrichtung 20 besteht darin, auf dem Boden in Schwaden abgelegtes Erntegut verschiedenster Art und Beschaffenheit aufzunehmen und es dem Feldhäcksler 10 zur weiteren Bearbeitung zuzuführen. Hierzu wird die Erntegutaufnahmeeinrichtung 20 während des Erntebetriebes sich auf die Stützräder 34 abstützend über das Feld bewegt, während sie zum Transport auf einer Straße oder auf Wegen mittels eines Hydraulikzylinders 38, der den Einzugsförderer 22 mit dem daran befestigten Schwadaufnehmer 20 um die Drehachse der Häckseleinrichtung 26 verschwenkt, angehoben wird.

Zum Schwadaufnehmer 20 gehört ein Querförderer 40 in Form einer Förderschnecke, der das aufgenommene Gut von den Seiten des Schwadaufnehmers 20 zu einer in der Mitte gelegenen, nicht gezeigten Abgabeöffnung fördert, hinter der die Vorpresswalzen folgen. Die Erntegutvorrichtung 20 weist auch einen, wie der Querförderer 40, rotativ angetriebenen Aufnehmer 42 mit um den Umfang eines Rotors verteilten Förderzinken 44 auf, der unterhalb des Querförderers 40 angeordnet ist und mit seinen Förderzinken 44 das Gut oberschlächtig vom Erdboden anhebt, um es dem Querförderer 40 zu übergeben. Der Aufnehmer 42 könnte auch als mit Förderzinken versehener Fördergurt ausgeführt sein. Außerdem ist ein Niederhalter 46 in Form einer frei drehbaren oder antreibbaren Walze 48 mit stromab folgenden Niederhalterstäben 50 durch an seinen beiden Enden angeordnete Tragarme 52 am Gestell 32 befestigt. Es könnte jedoch auch ein beliebiger anderer Niederhalter 46 verwendet werden, z.B. mit zwei Walzen oder einem Niederhalterblech. Die Achsen des Querförderers 40 und des Aufnehmers 42 verlaufen parallel zueinander und zum Erdboden und quer zur Fahrtrichtung V des Feldhäckslers 10. Ein Schmutzfangnetz 62 oder-gitter erstreckt sich zwischen den Tragarmen 52 über deren gesamte Länge.

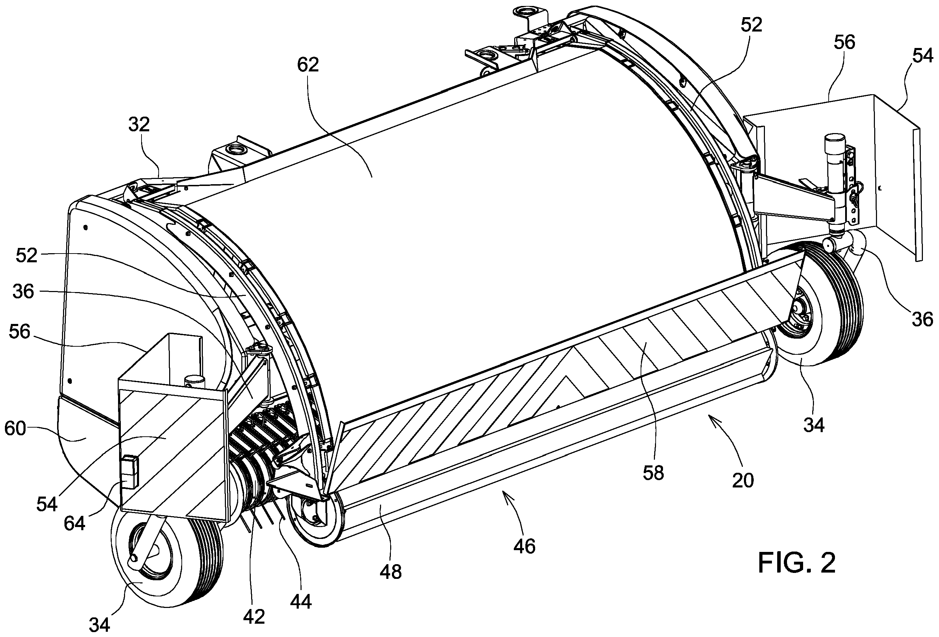

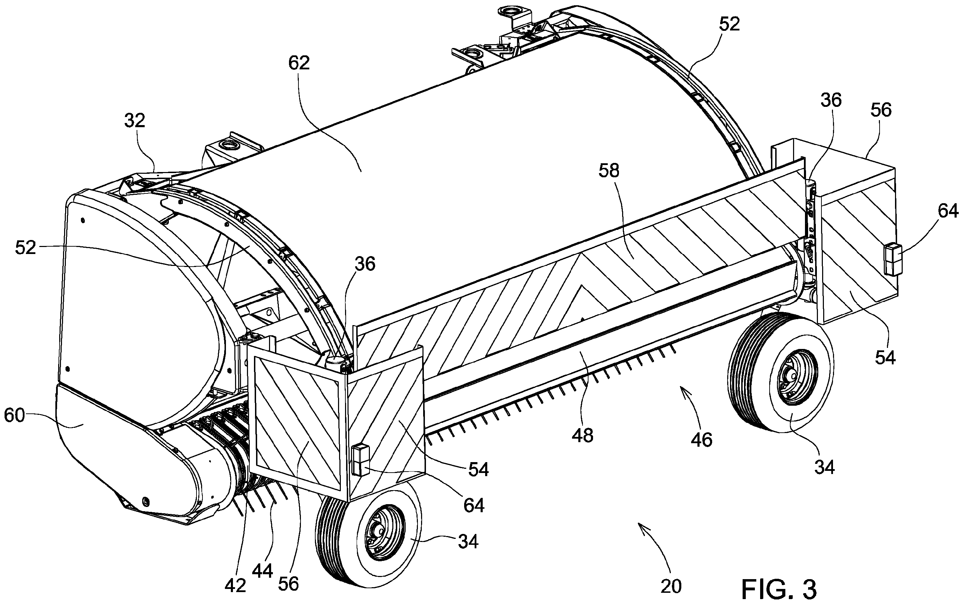

Die Tragarme 52 des Niederhalters 46 sind an ihren rückwärtigen Enden um eine quer zur Fahrtrichtung des Feldhäckslers 10 verlaufende Achse schwenkbar am Gestell 32 angelenkt und können durch einen oder zwei Aktoren um diese Achse verstellt werden, um den Niederhalter 46 in eine Feldarbeitsposition (s. Figuren 1 und 2) oder in eine Straßenfahrposition (Figur 3) zu verbringen. Auch die Stützräder 34 sind zwischen einer Feldarbeitsposition (Figur 2), in welcher sie seitlich gegenüber dem Aufnehmer 42 nach außen versetzt sind, und einer Straßenfahrposition (Figur 3) bewegbar, in welcher sie quer zur Vorwärtsrichtung V an der Vorderseite des Aufnehmers 42 oberhalb des Erdbodens angeordnet sind. Diese Verstellung kann manuell durch den Fahrer oder durch Aktoren oder selbsttätig beim durch den Hydraulikzylinder 38 bewerkstelligten Anheben der Erntegutvorrichtung 20 in die Straßenfahrposition erfolgen (s. DE 10 2008 001 459 A1), wobei die besagte Verstellung der Position des Niederhalters 46 zwischen Betriebs- und Straßenfahrposition mit der Aktivierung des Hydraulikzylinders 38 gekoppelt werden kann.

Der Schwadaufnehmer 20 ist mit einer Anzahl an Warntafeln 54, 56, 58, 60 versehen, die dazu dienen, bei der Straßenfahrt die vom Schwadaufnehmer 20 ausgehende Unfallgefahr zu vermindern. Eine erste Warntafel 54 und eine zweite Warntafel 56 sind rechtwinklig zueinander angeordnet und jeweils an einem der beiden Halterungen 36 der Stützräder 34 befestigt. Eine dritte Warntafel 58 ist an der Vorderseite der Tragarme 52 unmittelbar oberhalb des Niederhalters 46 angebracht und erstreckt sich quer zur Vorwärtsrichtung V zwischen den Tragarmen 52. Schließlich sind vierte Warntafeln 60 am unteren Seitenwänden des Gestells 32 befestigt.

Die ersten und zweiten Warntafeln 54, 56 sind derart an den Halterungen 36 angebracht, dass sich die zweiten Warntafeln 56 in der Straßenfahrposition (Figur 3) vertikal und quer zur Vorwärtsrichtung V erstrecken, um den Schwadaufnehmer 20 (gemeinsam mit den vierten Warntafeln 60) zur Seite hin abzusichern, während die ersten Warntafeln 54 sich vertikal und quer zur Vorwärtsrichtung V erstrecken und sich mit der dritten, sich vertikal und quer zur Vorwärtsrichtung V erstreckenden Warntafel 58, die gegenüber den ersten Warntafeln 54 nach oben versetzt ist, in horizontaler und vertikaler Richtung überlappen. Dadurch wird der Schwadaufnehmer 20 über seine gesamte Breite nach vorn abgesichert.

Es ist erkennbar, dass die Tragarme 52 in der Figur 3 gegenüber der in Figur 2 gezeigten Feldarbeitsposition angehoben sind, u.a. um die vertikale Orientierung der dritten Warntafel 58 und einen hinreichenden Abstand zwischen den Rädern 34 und dem Niederhalter 46 zu erreichen. An den ersten Warntafeln 54 sind außen zusätzlich Seitenbegrenzungs- und/oder Fahrtrichtungssignalleuchten 64 angebracht, die ggf. auch an den zweiten Warntafeln 56 angebracht werden könnten.

## Patentansprüche

1. Schwadaufnehmer (20) für eine selbstfahrende Erntemaschine (10), mit einem Gestell (32), an dem ein Förderzinken (44) umfassender Aufnehmer (42), ein Querförderer (40), ein an Tragarmen (52) abgestützter Niederhalter (46) und zwei Stützradzusammenbauten angebracht sind, wobei die Stützradzusammenbauten jeweils eine Halterung (36) und ein Stützrad (34) umfassen, die zwischen einer nach außen verschwenkten Feldarbeitsposition und einer nach innen verschwenkten Straßenfahrposition beweglich sind, **dadurch gekennzeichnet, dass** an den Halterungen (36) je eine erste, sich vertikal und in der Straßenfahrposition quer zur Vorwärtsrichtung (V) des Schwadaufnehmers (20) erstreckende Warntafel (54) und je eine zweite, sich vertikal und in der Straßenfahrposition entlang der Vorwärtsrichtung (V) des Schwadaufnehmers (20) erstreckende Warntafel (56) befestigt sind, die sich mit der Halterung (36) und dem Stützrad (34) zwischen der Feldarbeitsposition und der Straßenfahrposition bewegen, und dass sich eine dritte Warntafel (58) zwischen den Tragarmen (52) erstreckt.

2. Schwadaufnehmer (20) nach Anspruch 1, wobei die dritte Warntafel (58) sich bei in der Straßenfahrposition befindlichen Stützrädern (34) in Querrichtung lückenlos an die ersten Warntafeln (54) anschließt.

3. Schwadaufnehmer (20) nach Anspruch 1 oder 2, wobei an seitlichen Flächen des Gestells (32) beidseits vierte Warntafeln (60) befestigt sind.

4. Schwadaufnehmer (20) nach einem der Ansprüche 1 bis 3, wobei an den ersten fund/oder zweiten Warntafeln (54, 56) Leuchten (64) angebracht sind.

5. Selbstfahrende Erntemaschine (10) mit einem Schwadaufnehmer (20) nach einem der vorhergehenden Ansprüche.

## Claims

1. Swath pickup (20) for a self-propelled harvesting machine (10), with a frame (32) to which a pickup (42) comprising conveying tines (44), a transverse conveyor (40), a holding-down device (46) supported on supporting arms (52) and two supporting wheel assemblies are attached, wherein the supporting wheel assemblies each comprise a mount (36) and a supporting wheel (34), which are movable between an outwardly pivoted field-working position and an inwardly pivoted road-driving position, **characterized in that** a first warning panel (54) which extends vertically and transversely with respect to the forwards direction (V) of the swath pickup (20) in the road-driving position and a second warning panel (56) extending vertically and along the forwards direction (V) of the swath pickup (20) in the road-driving position are fastened to each of the mounts (36), said warning panels moving together with the mount (36) and the supporting wheel (34) between the field-working position and the road-driving position, and **in that** a third warning panel (58) extends between the supporting arms (52).

2. Swath pickup (20) according to Claim 1, wherein the third warning panel (58) is connected to the first warning panels (54) without a gap in the transverse direction when the supporting wheels (34) are in the road-driving position.

3. Swath pickup (20) according to Claim 1 or 2, wherein fourth warning panels (60) are fastened on both sides to lateral surfaces of the frame (32).

4. Swath pickup (20) according to one of Claims 1 to 3, wherein lights (64) are attached to the first and/or second warning panels (54, 56).

5. Self-propelled harvesting machine (10) with a swath pickup (20) according to one of the preceding claims.

## Revendications

1. Dispositif de ramassage d'andains (20) pour une moissonneuse autotractée (10), comprenant un bâti (32) sur lequel sont montés un dispositif de ramassage (42) comprenant des dents de transport (44), un convoyeur transversal (40), un dispositif de maintien vers le bas (46) supporté sur des bras de support (52) et deux assemblages de roues de support, les assemblages de roues de support comprenant chacun une fixation (36) et une roue de support (34), qui peuvent se déplacer entre une position de travail dans le champ pivotée vers l'extérieur et une position de conduite sur route pivotée vers l'intérieur, **caractérisé en ce qu'**un premier panneau de signalisation respectif (54) s'étendant verticalement et, dans la position de conduite sur route, transversalement à la direction d'avance (V) du dispositif de ramassage d'andains (20) et un deuxième panneau de signalisation respectif (56) s'étendant verticalement et, dans la position de conduite sur route, le long de la direction d'avance (V) du dispositif de ramassage d'andains (20) sont à chaque fois fixés sur les fixations (36), se déplacent avec la fixation (36) et la roue de support (34) entre la position de travail dans le champ et la position de conduite sur route, et **en ce qu'**un troisième panneau de signalisation (58) s'étend entre les bras de support (52).

2. Dispositif de ramassage d'andains (20) selon la revendication 1, dans lequel le troisième panneau de signalisation (58) se raccorde dans la direction transversale sans espace aux premiers panneaux de signalisation (54) lorsque les roues de support (34) se trouvent dans la position de conduite sur route.

3. Dispositif de ramassage d'andains (20) selon la revendication 1 ou 2, dans lequel des quatrièmes panneaux de signalisation (60) sont fixés des deux côtés à des surfaces latérales du bâti (32).

4. Dispositif de ramassage d'andains (20) selon l'une quelconque des revendications 1 à 3, dans lequel des lampes (64) sont montées au niveau des premiers et/ou des deuxièmes panneaux de signalisation (54, 56).

5. Moissonneuse autotractée (10) comprenant un dispositif de ramassage d'andains (20) selon l'une quelconque des revendications précédentes.
